# EUROPEAN PATENT APPLICATION

(11) **EP 3 434 654 A1**
(43) Date of publication of application: **30.01.2019**
(21) Application number: 17769502.0
(22) Date of filing: 03.03.2017
(51) Int. Cl.: C03C 8/02, C04B 41/86

(54) **CERAMIC COMPOSITION WITH METALLIC EFFECT AND APPLICATION METHOD**

(30) Priority: 23.03.2016 ES 201630359
(71) Applicant: Torrecid, S.A., 12110 Alcora (Castellón) (ES)
(72) Inventor: RUIZ VEGA, Óscar, 12110 Alcora (Castellón) (ES); SANMIGUEL ROCHE, Francisco, 12110 Alcora (Castellón) (ES)
(74) Representative: Carlos Hernando, Borja
(86) International application number: PCT/ES2017/070119
(87) International publication number: WO 2017/162896

(57) **Abstract**

The invention relates to a ceramic composition comprising Si metal powder, frit particles with a flow temperature between 1185°C and 1300°C, and a liquid part, for producing metallic effects on ceramic supports following a firing cycle at temperatures comprised between 1000°C and 1280°C. This composition prevents the sedimentation or disintegration of the metallic particles when they are in a liquid suspension, as well as the oxidation thereof after firing.

## Description

The present invention pertains to the field of ceramic compositions providing metallic effects on ceramic supports once subjected to a firing cycle at temperatures comprised between 1000°C and 1280°C.

### STATE OF THE ART

Obtaining metallic effects on ceramic products for floor and wall tiles is a type of product of great interest given the aesthetic possibilities that it offers.

In this sense, in the state of the art prior to the present invention, there are ink formulations based on precious metals (Au, Ag, Pd, Pt, Ti, etc.) that enable gold, silver and lustre metallic effects to be produced. These inks are applied by means of different printing technologies such as screen-printing, as described in patent US6355714B1, or inkjet printing, as disclosed in patent application WO2014037597A1. However, this type of composition, in addition to the high price thereof that prevents mass production, only develops the metallic effect when applied to third-fired ceramic products, in other words, to glazed ceramic supports that have been fired previously. Furthermore, the firing is limited to temperatures lower than 1000°C.

In the state of the art, the development of metallic effects is also addressed without the use of precious metals, as is the case of patent ES2161193 which describes a glaze formulation for single firing based on a content of P₂O₅ comprised between 7% and 27%. However, these glazes have a high thermal expansion coefficient which easily leads to defects such as cracks or bending after firing, as well as low chemical resistance.

On the other hand, the international patent application WO2006136610A2 discloses materials for the application on ceramic supports based on atomised powder particles of Fe, Ni, Co, Cu or mixtures thereof, with a particle size preferably comprised between 50 micrometres and 150 micrometres. These materials are usually applied in liquid suspension (water or glycols) along with materials commonly used in ceramic, the metallic powder being found in a concentration comprised between 35% and 95% with respect to the total solids. However, these metallic powders are characterised by a high density, approximately 7 g/cm³ or more, which leads to, when combined with ceramic materials normally used, which have a density less than 3 g/cm³, disintegrations once the liquid suspension is prepared, and therefore, the sedimentation of the metallic powders. Likewise, the need to use metallic powders in atomised form increases the cost and reduces the possibilities of application. Finally, the international patent application WO2006136610A2 also protects the use of nitrogen atmosphere in the cooling phase of the firing process to prevent the tendency of the metallic powders to oxidise and therefore, to not produce the metallic effect, thereby increasing the complexity of the process.

The state of the art also includes the patent application ES2235650 wherein ceramic formulations with metallic effect based on any metal or metal mixtures or non-oxidising metal alloys with a melting point greater than 1100°C and a grain size less than 100 micrometres are protected, being especially suitable for the purposes of said invention, the iron-based Cr-Ni alloys. However, the metals or metal mixtures or non-oxidising metal alloys have several limitations. One is the ease of oxidation due to their reactivity with glaze and the firing process. The other is once again a high density that causes the sedimentation thereof when applied in a liquid suspension. If, in addition, the metals are mixed with ceramic materials such as frits or clays, separation occurs due to the different density thereof, preventing the correct application thereof by means of techniques commonly used in the production of ceramic tiles (airbrushing, bell, waterfall, etc.)

### DESCRIPTION OF THE INVENTION

Throughout the invention and in the claims, the word "comprises" and its variants are not intended to exclude other technical features, additives, components or steps. In addition, the word "comprises" includes the case "consists of". For those skilled in the art, other objects, advantages and characteristics of the invention may be deduced from both the description and the practical use of the invention.

The present invention is a ceramic composition for producing metallic effects on ceramic supports following a firing cycle at temperatures comprised between 1000°C and 1280°C, comprising Si powder, frit particles with a flow temperature comprised between 1185°C and 1300°C that avoids the reactivity of the Si powder during firing, and a liquid part.

The use of Si metal powder in this ceramic composition prevents the sedimentation or disintegration of the metallic particles when they are in a liquid suspension, due to the fact that the density of the Si metal powder is less than 3 g/cm³ and therefore similar to the ceramic materials. Other metals have densities greater than 3 g/cm³ (approximately 7 g/cm³), such that they settle or disintegrate from the ceramic materials when they are in an aqueous suspension.

The use of frit particles with a flow temperature comprised between 1185°C and 1300°C prevents the oxidation reaction of Si with the ceramic products, for example, a ceramic glaze, during firing, and therefore, the oxidation of the metal is not produced, achieving the desired metallic effect on the ceramic support.

The term "ceramic support" as used in the present invention refers to the entire flat surface or surface with a relief consisting of a mixture of clays and/or ceramic materials (frits, silicates, feldspar, oxides, etc.) formed by means of common techniques in the ceramics sector, such as pressing, rolling or extrusion, among others, which can be glazed or unglazed, as well as green or subjected to a firing cycle.

Thus, the present invention comprises Si metal powder with a particle size comprised between 45 micrometres and 500 micrometres, preferably between 75 micrometres and 250 micrometres, a frit or mixture of frits with a flow temperature comprised between 1185°C and 1300°C and a liquid part.

According to the present invention, the content of Si powder is comprised between 10% and 45% by weight, preferably between 15% and 30%, with respect to the total solid part, in other words, the sum of Si powder and frit or frits. Furthermore, in the ceramic composition object of the invention, the content of the frit or mixture of frits is comprised between 55% and 90% by weight, preferably between 75% and 85%, with respect to the total solid part, in other words, the sum of Si powder and the mixture of frit or frits. Likewise, the frit or mixture of frits has a particle size comprised between 10 micrometres and 500 micrometres, preferably between 45 micrometres and 250 micrometres.

Moreover, the composition of the frit or mixture of frits comprises SiO₂ in a percentage by weight between 50% and 65%, Al₂O₃ in a percentage by weight between 15% and 25%, Na₂O in a percentage by weight between 2% and 8%, K₂O in a percentage by weight between 2% and 8%, CaO in a percentage by weight between 6% and 15% and MgO in a percentage by weight between 1% and 4%.

The liquid part according to the present invention is formed by solvents and additives that are selected depending on the deposition technique of the ceramic composition. In this sense, the solvents are selected from the group comprising water, low polarity solvents, medium polarity solvents and high polarity solvents. On the other hand, the additives are selected from the group comprising dispersing agents, binding agents, thickening agents, anti-settling agents, levelling agents, wetting agents, cross-linking agents, anti-foaming agents, coalescing agents or a mixture thereof.

One aspect of the present invention includes the fact that the liquid part is a glaze or ceramic barbotine, in other words, it consists of a water suspension, additives and components usually used in these types of compositions (frits, clays, feldspars, silicates, oxides, pigments, carbonates, nitrates, etc.).

The present invention envisages an application method of the ceramic composition comprising the following steps:
1. The Si powder, the frit or mixture of frits and the liquid part are mixed to obtain a homogeneous and stable ceramic composition.
2. The ceramic composition is applied on a ceramic support with a grammage comprised between 75 g/m² and 1000 g/m², preferably between 300 g/m² and 650 g/m².
3. The ceramic support assembly and ceramic composition applied are subjected to a firing cycle at a maximum temperature comprised between 1000°C and 1280°C.
4. The ceramic piece resulting from firing is subjected to polishing or roughing of the surface.

The application method according to the present invention is carried out on a green or fired ceramic support, in other words, which has been subjected to firing of the same prior to the application of the ceramic composition object of the invention. Likewise, the ceramic support can be glazed and/or decorated.

According to the present invention, the application of the ceramic composition is carried out by means of the techniques usually used in the ceramics sector. Examples of these techniques include but are not limited to airbrushing, waterfall, bell, screen-printing, flexography and rotogravure. Indeed, the ceramic composition object of the invention functions in any of the existing types of firing and ceramic support, such as single firing, double firing, porcelain, porous ceramics, stoneware, third firing and fourth firing.

A preferred embodiment of the present invention is a ceramic composition comprising:
- 15% - 30% of Si powder with a particle size comprised between 75 micrometres and 250 micrometres.
- 70% - 85% of a frit with a flow temperature comprised between 1185°C and 1300°C and a particle size comprised between 45 micrometres and 250 micrometres.
- Liquid part formulated to obtain a suspension of the ceramic composition suitable for application by means of the waterfall technique, with a viscosity between 30 and 40 seconds in Ford Cup 4 mm.

Next, the ceramic composition is applied with a grammage of 500 g/m² by means of the waterfall technique on a green and decorated ceramic support of glazed porcelain. Subsequently, the ceramic support assembly with the application of the ceramic composition is subjected to a firing cycle at a maximum temperature of 1195°C. Finally, the surface of the ceramic piece resulting from firing is polished.

Another preferred embodiment of the present invention is a ceramic composition comprising:
- 15% - 30% of Si powder with a particle size comprised between 75 micrometres and 250 micrometres.
- 70% - 85% of a frit with a flow temperature comprised between 1185 °C and 1300 °C and a particle size comprised between 45 micrometres and 250 micrometres.
- Liquid part formulated to obtain a suspension of the ceramic composition suitable for application by means of the airbrushing technique, with a viscosity between 20 and 30 seconds in Ford Cup 4 mm.

Next, the ceramic composition is applied with a grammage of 400 g/m² by means of the airbrushing technique on a glazed and green porous ceramic support. Subsequently, the ceramic support assembly with the application of the ceramic composition is subjected to a firing cycle at a maximum temperature of 1125°C. Finally, the surface of the ceramic piece resulting from firing is polished.

Likewise, the present invention envisages another application method of the ceramic composition comprising:
1. The Si powder, the frit or mixture of frits and the liquid part are mixed to obtain a homogeneous and stable composition.
2. The ceramic composition is subjected to drying to obtain flaky, pellet or atomised particles.
3. The ceramic composition as flaky, pellet or atomised particles is subjected to a forming process by means of pressing, extrusion or rolling. To do so, the flaky, pellet or atomised particles are mixed with the materials usually used when forming ceramic supports such as frits, clays, feldspars, oxides, pigments, etc.
4. The formed ceramic part is subjected to a firing cycle at a maximum temperature comprised between 1000°C and 1280°C.
5. The ceramic piece resulting from firing is subjected to polishing or roughing of the surface.

### EXAMPLES

The following examples are provided by way of illustration and are not intended to be limiting of the present invention. Furthermore, the present invention covers all of the possible combinations of particular and preferred embodiments indicated herein.

### Example 1.

A ceramic composition was prepared which comprises (expressed as a percentage by weight of solids):
- 25% of Si powder with a particle size comprised between 75 micrometres and 250 micrometres.
- 75% of a frit with a flow temperature comprised between 1185°C and 1300°C and a particle size comprised between 45 micrometres and 250 micrometres.
- Solvents and additives selected to obtain a suspension of the ceramic composition suitable for application by means of the waterfall technique, with a viscosity between 30 and 40 seconds in Ford Cup 4 mm.

The resulting ceramic composition was applied by means of the waterfall technique on a green, glazed and decorated porcelain ceramic support. The grammage of application was 500 g/m². Next, the resulting ceramic piece was subjected to a firing cycle at a maximum temperature of 1195°C. Once fired, it was polished, obtaining a ceramic tile with metallic effect.

### Example 2.

A ceramic composition was prepared which comprises (expressed as a percentage by weight of solids):
- 20% of Si powder with a particle size comprised between 75 micrometres and 250 micrometres.
- 80% of a frit with a flow temperature comprised between 1185°C and 1300°C and a particle size comprised between 45 micrometres and 250 micrometres.
- Solvents and additives selected to obtain a suspension of the ceramic composition suitable for application by means of the airbrushing technique, with a viscosity between 20 and 30 seconds in Ford Cup 4 mm.

The resulting ceramic composition was applied by means of the airbrushing technique on a green, glazed and porous ceramic support. The grammage of application was 400 g/m². Next, the resulting ceramic piece was subjected to a firing cycle at a maximum temperature of 1125°C. Once fired, it is polished, obtaining a ceramic tile with metallic effect.

### Example 3.

A ceramic composition was prepared which comprises (expressed as a percentage by weight of solids):
- 25% of Si powder with a particle size comprised between 75 micrometres and 250 micrometres.
- 75% of a mixture of two frits with a flow temperature comprised between 1185°C and 1300°C and a particle size comprised between 45 micrometres and 250 micrometres.
- Solvents and additives selected to obtain a suspension of the ceramic composition suitable for application by means of the waterfall technique, with a viscosity between 30 and 40 seconds in Ford Cup 4 mm.

The resulting ceramic composition was applied by means of the waterfall technique on a green, glazed and decorated porcelain ceramic support. The grammage of application was 350 g/m². Next, the resulting ceramic piece was subjected to a firing cycle at a maximum temperature of 1195°C. Once fired, it is polished, obtaining a ceramic tile with metallic effect.

### Example 4.

A ceramic composition was prepared which comprises (expressed as a percentage by total weight of the ceramic composition):
- 9% of Si powder with a particle size comprised between 60 micrometres and 500 micrometres.
- 11% of a frit with a flow temperature comprised between 1185°C and 1300°C and a particle size comprised between 65 micrometres and 500 micrometres.
- 80% of a ceramic barbotine for ceramic formulated to obtain a suspension of the ceramic composition suitable for flakes.

The mixture of the three components (Si power, frit and liquid part in the form of ceramic barbotine) was subjected to a process of drying and obtaining flakes with a particle size comprised between 600 micrometres and 4000 micrometres. The flakes obtained were subjected to a pressing process prior to mixture with the materials usually used in the pressing of ceramic supports. Next, the resulting ceramic piece was subjected to a firing cycle with a maximum temperature of 1195°C. Finally, it was polished, obtaining a ceramic tile with metallic effect.

### Example 5.

A ceramic composition was prepared which comprises (expressed as a percentage by total weight of the ceramic composition):
- 9% of Si powder with a particle size comprised between 45 micrometres and 250 micrometres.
- 11% of a frit with a flow temperature comprised between 1185°C and 1300°C and a particle size comprised between 45 micrometres and 300 micrometres.
- 80% of a ceramic glaze for porcelain formulated to obtain a suspension of the ceramic composition suitable for the application thereof by means of the airbrushing technique, with a viscosity between 20 and 30 seconds in Ford Cup 4 mm.

The resulting ceramic composition was applied by means of the airbrushing technique on a green and glazed porcelain ceramic support. The grammage of application was 500 g/m². Next, the resulting ceramic piece was subjected to a firing cycle at a maximum temperature of 1195°C. Once fired, it was polished, obtaining a ceramic tile with metallic effect.

## Claims

1. A ceramic composition intended to produce metallic effects in ceramic supports comprising:
a. Si metal powder with a particle size comprised between 45 micrometres and 500 micrometres, preferably between 75 micrometres and 250 micrometres,
b. A frit or mixture of frits with a flow temperature comprised between 1185°C and 1300°C,
c. A liquid part.

2. The ceramic composition according to claim 1, wherein the percentage by weight of Si powder is comprised between 10% and 45%, preferably between 15% and 30%, with respect to the total solid part.

3. The ceramic composition according to claim 1, wherein the percentage by weight of the frit or mixture of frits is comprised between 55% and 90%, preferably between 70% and 85%, with respect to the total solid part.

4. The ceramic composition according to claim 1, wherein the frit or mixture of frits has a particle size comprised between 10 micrometres and 500 micrometres, preferably between 45 micrometres and 250 micrometres.

5. The ceramic composition according to claim 1, wherein the composition of the frit or mixture of frits comprises SiO₂ in a percentage by weight between 50% and 65%, Al₂O₃ in a percentage by weight between 15% and 25%, Na₂O in a percentage by weight between 2% and 8%, K₂O in a percentage by weight between 2% and 8%, CaO in a percentage by weight between 6% and 15% and MgO in a percentage by weight between 1% and 4%.

6. The ceramic composition according to claim 1, wherein the liquid part comprises solvents and additives.

7. The ceramic composition according to claim 6, wherein the solvents are selected from the group comprising water, low polarity solvents, medium polarity solvents and high polarity solvents.

8. The ceramic composition according to claim 6, wherein the additives are selected from the group comprising dispersing agents, binding agents, thickening agents, anti-settling agents, levelling agents, wetting agents, cross-linking agents, anti-foaming agents, coalescing agents or a mixture thereof.

9. The ceramic composition according to claim 1, wherein the liquid part is a glaze or ceramic barbotine.

10. An application method of the ceramic composition according to claim 1, which comprises the following steps:
a. The Si powder, the frit or mixture of frits and the liquid part are mixed to obtain a homogeneous and stable composition,
b. The ceramic composition is applied on a ceramic support with a grammage comprised between 75 g/m² and 1000 g/m², preferably between 300 g/m² and 650 g/m²,
c. The ceramic support assembly and ceramic composition applied are subjected to a firing cycle at a maximum temperature comprised between 1000°C and 1280°C,
d. The ceramic piece resulting from firing is subjected to polishing or roughing of the surface.

11. The application method according to claim 10, wherein the ceramic support is green or fired.

12. The application method according to claim 10, wherein the ceramic support is glazed and/or decorated.

13. The application method according to claim 10, wherein the application is carried out by means of the techniques usually used in the ceramics sector, such as airbrushing, waterfall, bell, screen-printing, flexography and rotogravure, among others.

14. An application method according to claim 1, which comprises the following steps:
a. The Si powder, the frit or mixture of frits and the liquid part are mixed to obtain a homogeneous and stable composition,
b. The ceramic composition is subjected to drying to obtain flaky, pellet or atomised particles,
c. The ceramic composition as flaky, pellet or atomised particles is subjected to a forming process by means of pressing, extrusion or rolling,
d. The formed ceramic part is subjected to a firing cycle at a maximum temperature comprised between 1000°C and 1280°C,
e. The ceramic piece resulting from firing is subjected to polishing or roughing of the surface.
